# EUROPEAN PATENT APPLICATION

(11) **EP 1 728 724 A1**
(43) Date of publication of application: **06.12.2006**
(21) Application number: 05727188.4
(22) Date of filing: 23.03.2005
(51) Int. Cl.: B65D 1/00, B32B 9/00, B32B 27/00

(54) **SYNTHETIC RESIN CONTAINER WITH HIGH GAS BARRIER PERFORMANCE**

(30) Priority: 26.03.2004 JP 2004093263
(71) Applicant: Yoshino Kogyosho Co., Ltd., Tokyo 136-8531 (JP)
(72) Inventor: TAKADA, Makoto, YOSHINO KOGYOSHO CO., LTD., Matsudo-shi, Chiba 2702297 (JP); TATENO, Hironori, YOSHINO KOGYOSHO CO., LTD., Matsudo-shi, Chiba 2702297 (JP); INABA, Junichi, YOSHINO KOGYOSHO CO., LTD., Koto-ku, Tokyo 1368531 (JP); HAYASE, Takayuki, YOSHINO KOGYOSHO CO., LTD., Koto-ku, Tokyo 1368531 (JP); SUZUKI, Masato, YOSHINO KOGYOSHO CO., LTD., Isehara-shi, Kanagawa 2591103 (JP); SUGAI, Masahiro, YOSHINO KOGYOSHO CO., LTD., Isehara-shi, Kanagawa 2591103 (JP); IMAI, Toshio, YOSHINO KOGYOSHO CO., LTD., Matsudo-shi, Chiba 2702297 (JP); HATTORI, Masao, YOSHINO KOGYOSHO CO., LTD., Koto-ku, Tokyo 1368531 (JP)
(74) Representative: Gray, James
(86) International application number: PCT/JP2005/005231
(87) International publication number: WO 2005/092714

(57) **Abstract**

A synthetic resin container possessing a higher gas barrier property, and having a coating film (2) possessing a higher gas barrier property and positioned on an inner surface and/or and outer surface of the container body, wherein at least the coating film (2) is constituted of: an organic silicon compound layer (2a) positioned on the or each surface of the container body and including nitrogen, silicon, carbon, hydrogen, and oxygen; and a silicon oxide compound layer (2b) including a silicon oxide compound as a main component.

## Description

### TECHNICAL FIELD

The present invention relates to a synthetic resin container represented by a bottle made of polyethylene terephthalate, i.e., represented by a so-called PET bottle, and contemplates preventing permeation of gas, particularly oxygen gas and carbon dioxide gas, through the container to thereby stabilize and preserve a quality of the contents of the container.

### BACKGROUND ART

There have been recently and frequently used blow molded containers made of synthetic resin such as those for containing therein soft drinks, alcoholic beverages, edible oils, soy sauces, and the like, from a standpoint that such containers are easy to handle in disposition, transference, recycle, and the like. It is inevitable for this kind of container that oxygen gas and/or carbon dioxide gas permeates through the container as compared with a glass-made container, thereby causing a defect that a so-called shelf-life, over which the quality of contents of the container can be kept, is shortened.

As a technique for dealing with such a problem, for example, JP-A-2000-109076 has proposed a bottle including an inner surface having thereon a coating film (SiOₓ) possessing a higher gas barrier property and coated thereto by vapor deposition or sputtering. Meanwhile, there have been proposed other containers and the like, each having a two-layered coating film comprising: a compound coating including silicon, carbon, and oxygen, and positioned on a surface of a container body; and a silicon oxide compound positioned on a surface of the compound coating. Although it is stated that such containers are capable of improving an oxygen barrier property (oxygen barrier property of PET bottle) which is several times as high as that of a container without coating thereby enabling a quality of contents to be stably preserved, it has been recently demanded to further improve a gas barrier property so as to realize stabilized preservation over a longer period of time.

### DISCLOSURE OF THE INVENTION

It is therefore an object of the present invention to propose a novel container having a higher gas barrier property.

The present invention resides in a synthetic resin container possessing a higher gas barrier property, and having a coating film possessing a higher gas barrier property and positioned on at least one of an inner surface and outer surface of a body of the container, characterized in that at least the coating film comprises: an organic silicon compound layer positioned on the or each surface of the container body and including nitrogen, silicon, carbon, hydrogen, and oxygen; and a silicon oxide compound layer positioned on a surface of the organic silicon compound layer and including a silicon oxide compound as a main component.

According to the present invention, the organic silicon compound layer as a first layer of the coating film and including nitrogen is positioned on the surface (inner or outer surface) of the container body, and the silicon oxide compound layer as a second layer and including the silicon oxide compound as the main component is deposited on the surface of the organic silicon compound layer, thereby remarkably improving the gas barrier property by virtue of the synergistic effect of the two kinds of coatings.

In the container having the above configuration, it is desirable that the organic silicon compound layer and/or silicon oxide compound layer is a vapor deposited coating, and it is particularly desirable that the refractive index thereof is in a range of 1.3 to 1.6.

### BRIEF DESCRIPTION OF THE DRAWINGS

The present invention will be described more concretely with reference to the drawings.

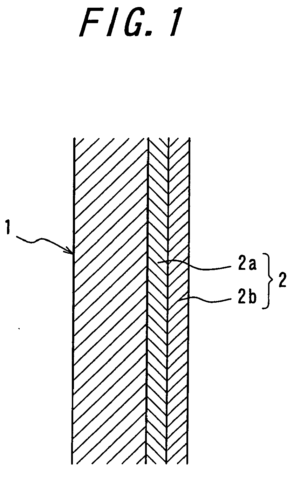

FIG. 1 is a cross-sectional view of an essential part of a synthetic resin container according to the present invention.

### BEST MODE FOR CARRYING OUT THE INVENTION

FIG. 1 shows an essential part of a PET bottle molded by biaxial-stretching blow molding, in which reference numeral 1 designates a wall portion constituting a container body, and 2 designates a coating film provided on the wall portion 1 to thereby prevent permeation of gas (particularly, oxygen gas, carbon dioxide gas and the like) through the container from the interior to the exterior or vice versa.

The coating film 2 comprises: an organic silicon compound layer 2a including silicon, carbon, hydrogen, and oxygen, and positioned on an outer surface of the container body 1; and a silicon oxide compound layer 2b positioned on a surface of the organic silicon compound layer 2a, and including a silicon oxide compound as a main component.

Of the layers constituting the coating film 2, the organic silicon compound layer 2a is brought to include nitrogen, silicon, carbon, hydrogen, and oxygen by adding nitrogen gas instead of inert gas (rare gas element such as Ar) upon formation of the layer 2a, thereby establishing a barrier container having a further improved gas barrier property.

Here, the conventional organic silicon compound layer including silicon, carbon, and oxygen rarely exhibits a gas barrier property in itself, and so does the organic silicon compound layer 2a of the present invention similarly to the conventional organic silicon compound layer, thus considerable differences are not seen between them in this respect.

However, in case of the deposition of a compound layer (including silicon oxide as a main component) having a gas barrier property and positioned on a surface of the conventional organic silicon compound layer, the gas barrier compound layer simply exhibits the gas barrier property inherently possessed by itself, and there can be never expected a remarkable improvement of gas barrier property such as obtained in the present invention by virtue of a synergistic effect of the two kinds of coatings according to the present invention.

### Embodiment 1

There were formed coating films on inner surfaces of PET bottles by plasma CVD utilizing radio frequency pulses, respectively, and there was conducted an evaluation of oxygen barrier property (oxygen permeability and water-vapor permeability). The results thereof are shown in Tables 1 and 2. Note that the pulse discharge condition in the plasma CVD was: On: 0.1 sec, and Off: 0.1 sec.

Table 1 shows a result from a situation where Ar gas was used upon formation of an organic silicon compound layer, and Table 2 shows a result from a situation where nitrogen gas was used upon formation of an organic silicon compound layer. Note that, in Tables 1, 2, "DEPO" represents a discharge time (for example, 8 means pulse discharge for 8 seconds); "HMDSO" represents hexamethyl-disiloxane; and "sccm" for gas flow represents a gas amount (cc) to be flowed during one minute under a condition of 0°C and at 1 atmosphere.

Further, the "composition ratios of starting gases" represent ratios in a mixed state of gases including HMDSO, oxygen, nitrogen, argon, and the like; the "water-vapor permeability at 40°C-75% RH" represents the temperature and the relative humidity in the storage environment; and "BIF" represents a barrier improvement factor compared with a bottle without deposition of a coating film.

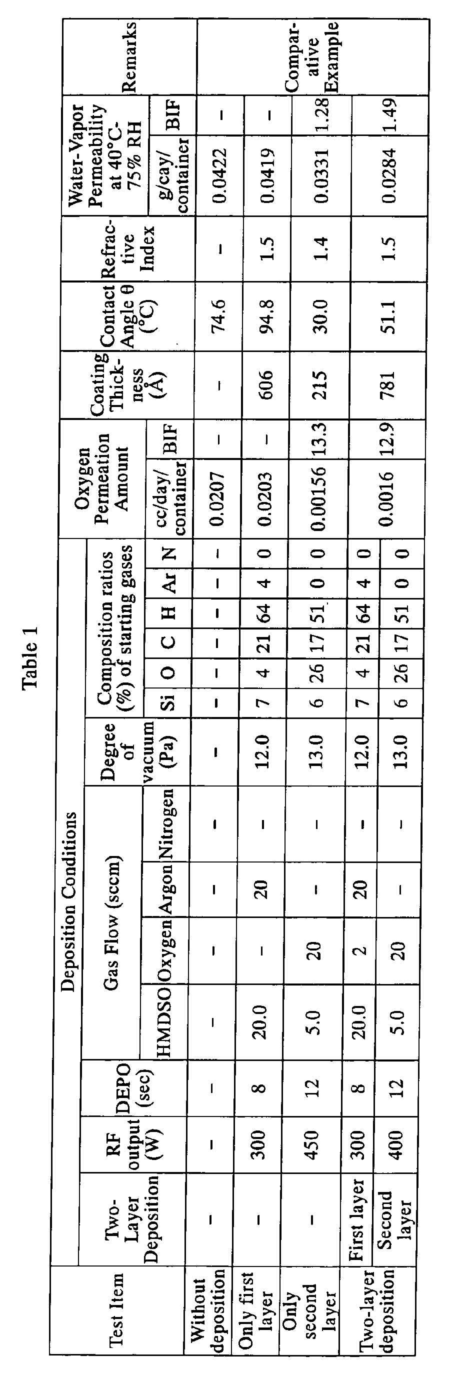

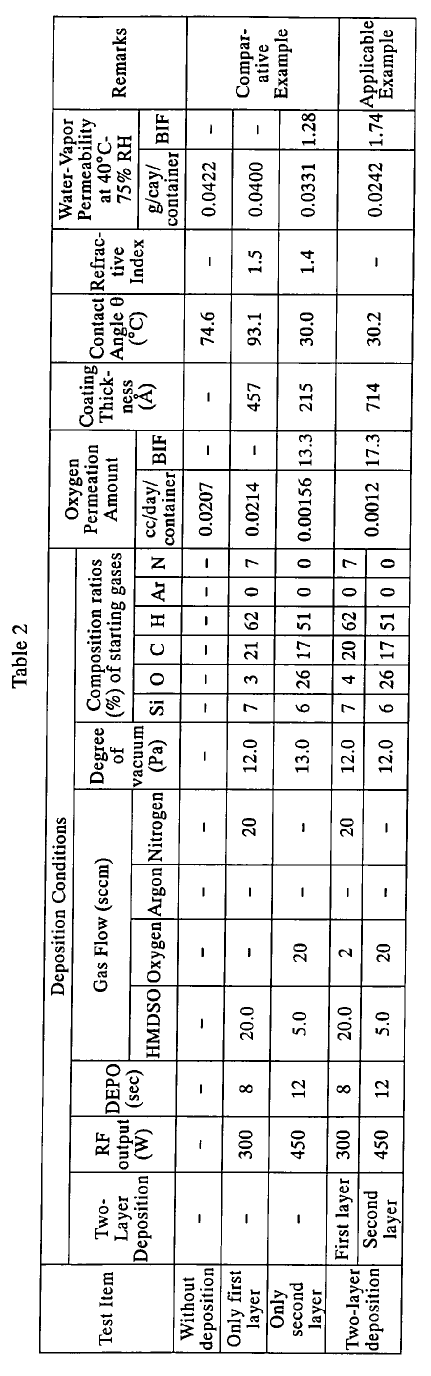

As apparent from Tables 1, 2, the container (two-layer deposition in Table 2) according to the present invention exhibits: an oxygen barrier property (BIF value) which is about 1.3 times as high as that of the container (two-layer deposition in Table 1) where the organic silicon compound layer was deposited by addition of Ar; and a water barrier property (water-vapor permeability, BIF value) which is about 1.2 times as high as that of the latter container; and it is thus confirmed that the oxygen barrier property and water barrier property can be further improved in the container according to the present invention, as compared with a container simply comprising a PET bottle, or a container comprising a PET bottle having a layer deposited thereon including a silicon oxide compound as a main component.

As apparent from the above, the present invention can provide a synthetic resin container having a higher gas barrier property and excellent in storage stability of contents.

## Claims

1. A synthetic resin container possessing a higher gas barrier property, and having a coating film possessing a higher gas barrier property and positioned on at least one of an inner surface and outer surface of the container body, **characterized in**
**that** at least said coating film comprises: an organic silicon compound layer positioned on the or each surface of the container body and including nitrogen, silicon, carbon, hydrogen, and oxygen; and a silicon oxide compound layer positioned on a surface of said organic silicon compound layer and including a silicon oxide compound as a main component.

2. The container of claim 1, wherein said organic silicon compound layer and/or silicon oxide compound layer is a vapor deposited coating.

3. The container of claim 1 or 2, wherein said organic silicon compound layer and/or silicon oxide compound layer has a refractive index in a range of 1.3 to 1.6.
